# EUROPEAN PATENT APPLICATION

(11) **EP 2 048 464 A2**
(43) Date of publication of application: **15.04.2009**
(21) Application number: 08166115.9
(22) Date of filing: 08.10.2008
(51) Int. Cl.: F26B 17/14, F26B 21/04, F26B 23/00

(54) **Granular material treatment unit having a heat-regeneration group**

(30) Priority: 09.10.2007 IT VR20070140
(71) Applicant: Moretto S.P.A., 35010 Massanzago (Padova) (IT)
(72) Inventor: Moretto, Renato, 35010, Massanzago- Padova (IT)
(74) Representative: Reniero, Cirillo Silvano

(57) **Abstract**

The present invention relates to a granular material treatment unit, comprising:
- a support structure (S);
- a silo or hopper (2) delimiting a receiving cavity (3) for a granular material, which has an upper loading mouth (4), a lower unloading mouth (5) for the granular material;
- at least one feeding duct (6,6a) for a treatment gas leading to a lower area of said receiving cavity (3).

The treatment unit also includes at least one heat-exchanging group (8) located on top of the receiving cavity (3) so that it is hit, in use, by the treatment gas delivered by the at least one feeding duct (6,6a) and rising along the receiving cavity (3).

## Description

The present invention relates to a treatment unit for granular material having a heat-regeneration group.

In the description and the claims of the present invention, the term "granular" means both materials that are classified as such by being naturally made of granules and those obtained by a milling process (such as those known as re-milled products) and powders.

There is often the need of performing operations, such as dehumidification or drying of granular materials, on specific granules of plastic materials, before being used in a moulding press in order to make them suitable for successive treatment and/or processing operations.

To perform such operations, a granular material is loaded into and kept in silos, also called "hoppers", for a predetermined time. A hot and dehumidified gas medium, such as dry hot air or inert gas, typically nitrogen, is caused to flow through them.

After flowing through the granular material in a silo, the gas medium is collected and recycled after having been filtered and heated/dehumidified in order giving it features of humidity, temperature, etc. required for that specific granular material to be treated.

Granular material dehumidifying plants have already been proposed where, the employed gas medium leaving a dehumidification silo or hopper is conveyed trough a suitable duct to a remote, i.e. relatively far from the silo, heat exchanger for recovering its residual heat, and thus for being cooled.

When granules of plastic material need to be treated in hoppers or silos, the treatment gas medium (air) is supplied to a lower area of the silo so that the gas medium is caused to flow throughout the entire useful height of the silo, and thus to hit practically all the material in it, so as to perform forced dehumidification and preheating of the granular material that will, consequently, be used in optimum conditions for subsequent processing.

The processing air at the outlet of a treatment hopper is charged with humidity and still possesses a considerable amount of heat that is usually employed to pre-heat the processing air to be supplied to the hopper through dehumidification equipments. Thus, cooling of the air coming out form the hopper is also obtained, and in view of the fact that the air flow coming out from the hopper, as known, has to be conveyed first to a pressurization unit (such as a blower) and then to a water adsorbing unit, this is advantageous for optimum working of both such units.

In conventional plants heat exchange between air coming from the hopper and air to be conveyed to the same hopper usually occurs in counter-current fashion in a suitable externally located heat-exchanging group.

A plant of this type, however, involves considerable heat dispersion, which takes place at least in the connecting ducts between hopper and heat-exchanging group and cannot be reduced below certain limits even by providing good insulating materials around the connecting ducts. In any case, such a plant requires a very large plant volume and suitable support structures for both the silo or hopper and the heat-exchanging group.

The first aim of the present invention is to provide a treatment unit for granular materials and particularly plastic granular materials, that is suitable for eliminating or drastically reducing the drawbacks mentioned above in connection with the conventional granular materials treatment plants.

Another object of the present invention is to provide a granular material' treatment unit which can operate in optimum conditions for both the dehumidification processing of granular material and the heat regeneration from the gas medium used for processing the granular material.

Another object of the present invention is to provide a compact treatment unit obtainable at competitive manufacturing costs.

Still another object of the resent invention is to provide a dehumidification and/or drying plant designed for correctly perform treatment operations on granular materials at a lower energy consumption than with conventional plants.

According to a first aspect of the present invention here is provided a treatment unit for a granular material, the treatment unit comprising:
- a support structure;
- a silo or hopper delimiting a receiving cavity for a granular material, the receiving cavity having an upper granular material loading mouth and a lower granular material unloading mouth;
- at least one feeding duct for a treatment gas medium leading to a lower area of the receiving cavity.

The treatment unit further comprises:
- at least one heat exchanging group located on top of the receiving cavity, so that it flooded, in use, by the treatment gas medium supplied through at least one feeding duct and rising along the receiving cavity.

According to another aspect of the present invention, a dehumidification plant for granular material is also provided, comprising:
- at least one treatment unit as specified above, and
- at least one dryer suitable for regenerating the gas medium coming from said at least one treatment unit and conveying it to at least one heat-exchanging group for being pre-heated.

Further aspects and advantages of the present invention will more clearly appear from the following detailed description of specific embodiments of a granular material treatment unit, the description being given with reference to the accompanying drawings, in which:

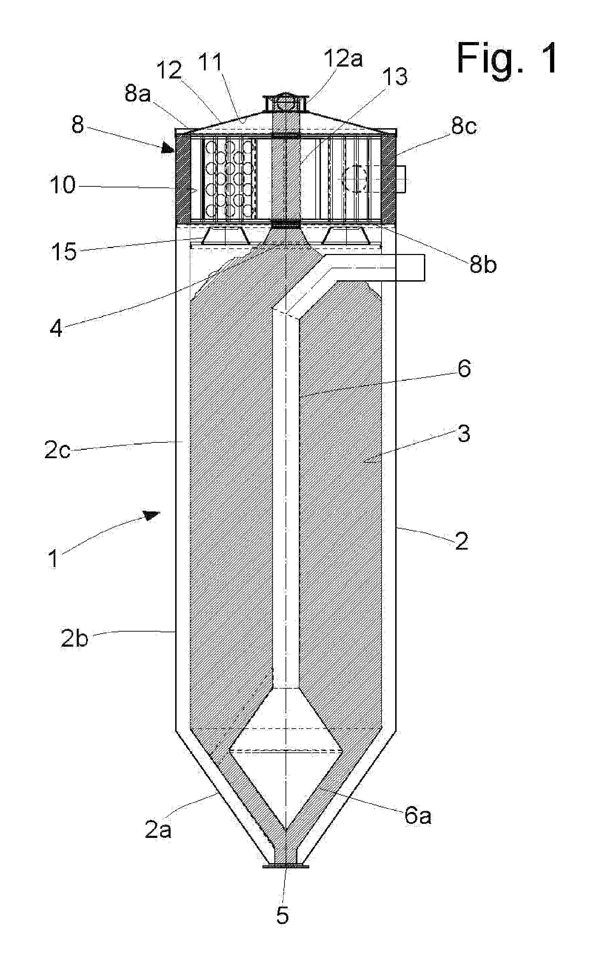

Figure 1 is a longitudinal sectional view of a treatment unit according to the present invention;

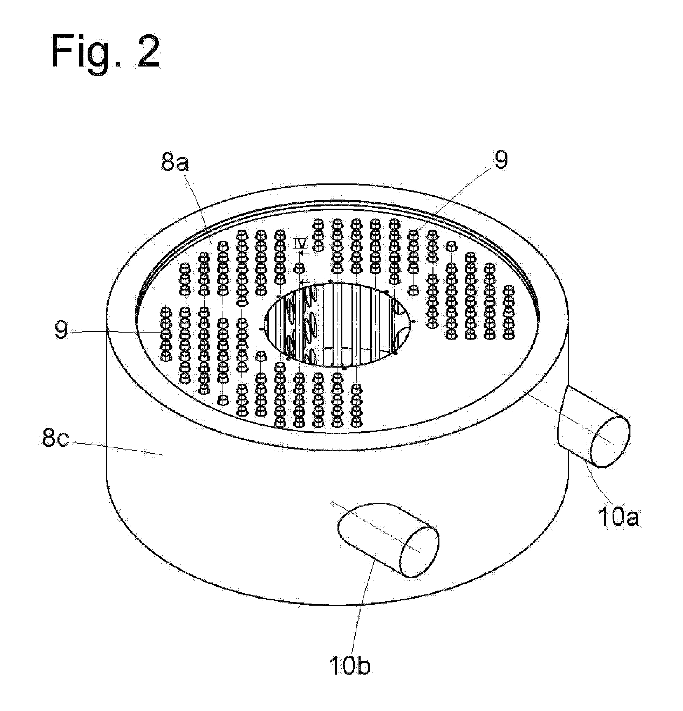

Figure 2 is a perspective view slightly from above of a heat-exchanging group for the treatment unit of Fig. 1;

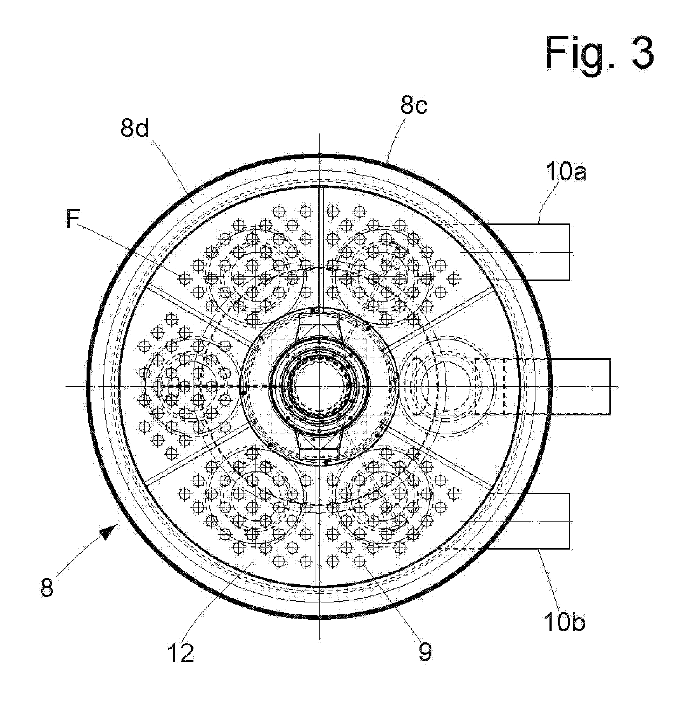

Figure 3 is a plant view with transparent parts of the heat-exchanging group of Fig. 2;

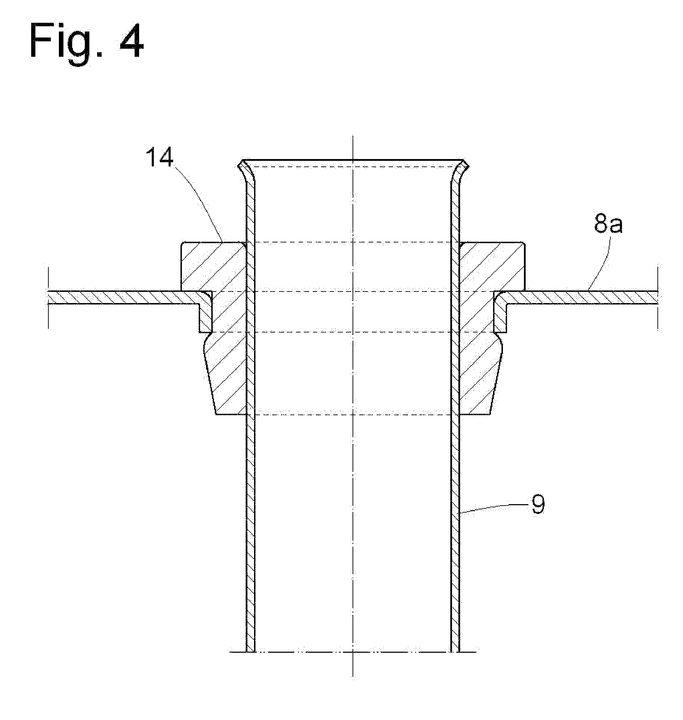

Figure 4 is a sectional view taken along line IV-IV of Figure 2; and
Figure 5 diagrammatically shows a dehumidification plant for a granular material comprising one treatment unit according to the present invention.

In the accompanying drawings, the same or similar parts or components have been indicated with the same reference numerals.

With reference to the above mentioned Figures, a treatment unit 1 for granular materials, such as granular plastic materials, is shown which comprises a support structure S, a silo or hopper 2 which delimits a receiving cavity 3 for at least one granular material which is supplied through a loading mouth 4 and exits through a granular material discharging or delivery mouth 5, the latter being located in a lower area of the silo 2.

Feeding means of at least one treatment gas medium, e. g. air or an inert gas, such as nitrogen, are also provided internally and specifically at a heat-exchanging group. An outlet or a plurality of outlets for the gas medium is provided at the top of the treatment unit. According to the illustrated embodiment, the feeding means comprise a feeding pipe or duct 6, e. g. an ell member, which from the top of the silo extends downwards to a lower zone of the silo where it is in fluid communication with a dispenser 6a of treatment gas medium.

The treatment unit further comprises a heat exchanging group 8 which can be secured at the top of cavity 3 and arranged to partly close it.

More particularly, the heat exchanging group 8 comprises:
- a plurality of ducts 9, e. g. staight-lined (vertical in use) and/or substantially helicoidal ducts developed, each having one end thereof in fluid communication with cavity 3 and its other end leading to an exhaust; and
- a chamber 10 arranged to locate ducts 9 and having at least one inlet opening 10a for a secondary gas medium designed to be put in heat exchange relationship with the treatment gas medium and at least an outlet opening 10b for the secondary gas medium heated by the treatment gas medium.

The plurality of ducts and chamber 10 are thus arranged in heat exchange relationship.

Advantageously, ducts 9 are arranged to deliver a treatment gas medium therein from cavity 3 to a manifold area 11 provided between the heat-exchanging group 8 and a top roof plate 12, which is in fluid communication with the outside through a duct 12a having an annular cross section.

The heat-exchanging group 8 preferably comprises two substantially identical walls or plate elements, i. e. a base wall 8a and a top wall 8b, respectively, which have a ring configuration and are connected to one another through an outer side wall or jacket 8c, possibly wound by a layer of a heat insulating or lagging material 8d. Each ring wall delimits a central circular opening into which a granular material feeding duct 13 of can be inserted that extends to loading mouth 4.

A plurality of bores F are provided in the plate elements 8a, 8b so that each bore on a plate element 8a, 8b is substantially in line with a bore on the other plate element 8b, 8a, respectively, and thus each duct 9 is fitted into two aligned bores each formed in a respective plate element 8a, 8b.

Sealing between ducts and plate elements is ensured by arranging respective annular joint sealing elements 14, e. g. made of a thermoplastic material such as Santoprene® (registered trademark of Advanced Elastomer Systems, L.P.) along the edge of each bore before assembling any duct 9.

The inlet opening 10a and the outlet opening 10b for gas medium are provided, instead, by inserting and securing, e. g. through welding, a respective sleeve collar into bores formed in the jacket or side wall 8c.

According to a preferred embodiment of the invention, a filtering group 15 for the gas medium is located, in use, immediately below the heat exchanging group and can be secured either to silo 2 or to the plate element or base wall 8b.

As it is known in the art, silo 2 can comprise, in use, a lower portion having a configuration of a truncated cone 2a, and an intermediate substantially cylindrical portion 2b (located at the same level as the dispenser 6a). Moreover, a layer of heat-insulating or lagging material 2c can be provided on silo 2.

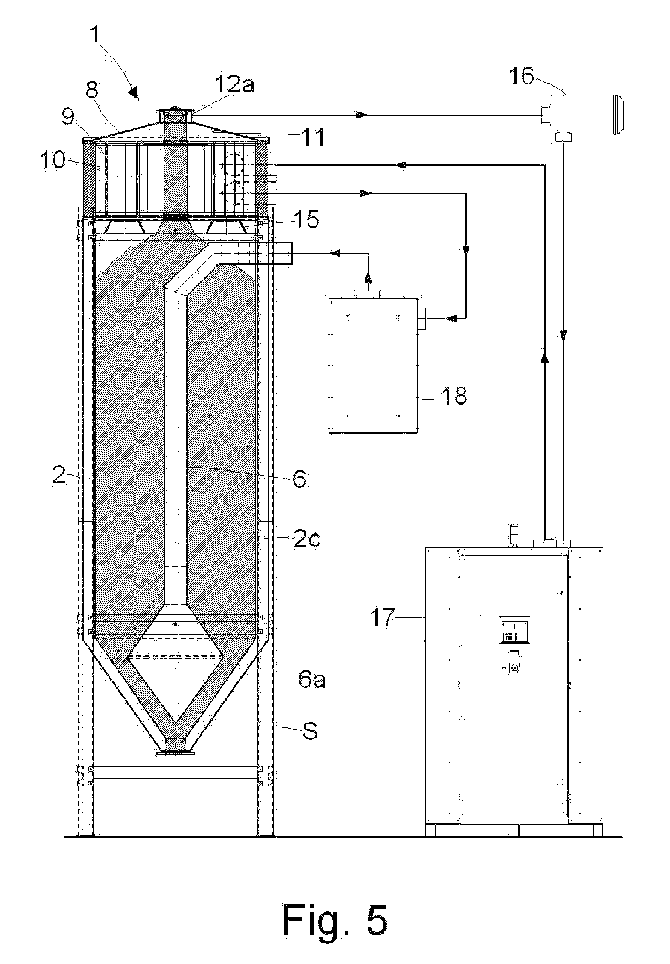

The treatment unit according to the present invention can be employed in a plant for processing granular materials, such as granular plastic materials, as illustrated in Fig. 5.

Such a plant comprises a treatment unit 1 for granular materials, a filter 16 designed to receive the air that comes out of the top of the treatment unit 1 and is then conveyed to a dryer 17, where it is dehumidified and then supplied to chamber 10 for being pre-heated. The pre-heated air is first supplied to a heater or heating means 18 and then to the feeding means 6 for being again fed to the receiving cavity 3 for heating and dehumidifying the granular material contained therein.

It will be understood that in order to convey the gas medium to the apparatuses and the ducts in a plant according to the present invention, compression means (e. g. a blower) can be employed, while possibly supplying the gas medium at a relatively high pressure to the plant, monitoring the pressure thereof during the processing steps and, if necessary, energizing the pressurizing means when the pressure becomes lower than a predetermined level.

According to such a plant, the still hot air leaving the receiving cavity is loaded with humidity that was absorbed while flowing through the granular material, releases a good deal of its enthalpy while pre-heating the processing fluid coming from the dryer 17. The required power required for heating the processing gas medium, i.e. the air to be fed to the hopper, by means of an electrical resistance or heater 18 in order to heat it to a predetermined temperature suitable for processing a granular material will then be certainly lower than that required with the solutions proposed up to now. The air discharged from the hopper, on the other hand, has already been partly cooled down due to heat exchanged with the processing gas medium (air to be conveyed to the hopper), and thus another heat-exchanger could be no longer necessary for the cooling thereof, and the air can then be again conveyed to the dryer, possibly after flowing through filter 16.

By providing a treatment unit with an heat-exchanging group mounted at the top of the receiving cavity, heat dispersions at the connections between hopper and heat-exchanger, which necessarily occur with the solutions proposed up to now, are eliminated or at least drastically reduced. At the same time, air blown into the receiving chamber is at an higher temperature than that of the air coming from the hopper and conveyed to heat-exchangers according to the state of the art teachings. The heat exchanger efficiency is, therefore, higher than that of solutions proposed up to now and a greater heat regeneration is also obtained.

It should also be noted that inspection and maintenance operations of a treatment unit according to the present invention are very easily conducted, as all the components thereof can be fully disassembled.

According to the present invention, ducts having a large cross-section and thus do not clog easily and do not require a thorough air filtration are provided, and thus low powered filtering means can be adopted.

Moreover, by ensuring a watertight seal as described above, owing to the provision of thermoplastic material rings, the treatment unit is not affected by the negative effects caused by thermal expansion mainly in the axial direction of each duct, whereas in conventional heat-exchangers where tubes are welded, welding resistance could be drastically impaired when temperatures of fluids to be heated/cooled change on a large scale.

It should also be noted that the air temperature coming from the treatment unit is lower than that of the air coming from hoppers in conventional treatment plants, and this results in an improvement of security for operators inspecting the plant, particularly in the upper part of the hopper.

The treatment unit as above described is susceptible to numerous modifications and variations within the scope of the invention as defined by the claims.

Thus, for example, hoppers or silos having a squared o polygonal cross-section can be employed.

In so far as the heat-exchanging group geometry is concerned, it should be understood that any known measure in the art can be adopted, in particular if directed toward improving convection and overall heat exchange coefficients. For example, one could provide:
- ducts provided with interrupted or non interrupted innner or outer fins in view of increasing the heat exchange area;
- so-called "twisted tape" or "bent strip" to be located in the ducts, or corrugated ducts or ducts provided with axial or helicoidal inner ribs as a means for breaking and regenerating the "boundary layer" or thermal insulation layer and generating turbulence while increasing the heat exchanging area within ducts at the same time.

## Claims

1. A treatment unit for a granular material, having:
- a support structure (S);
- a silo or hopper (2) delimiting a receiving cavity (3) for the granular material, which has an upper loading mouth (4) and a lower unloading mouth (5) for said granular material;
- at least one feeding duct (6, 6a) for a treatment gas medium leading to a lower zone of said receiving cavity (3); and
**characterised in that** it comprises:
at least one heat-exchanging group (8) located on top of said receiving cavity (3) thereby being hit, in use, by said treatment gas medium delivered by said at least one feeding duct (6, 6a) and rising up along said receiving cavity (3).

2. A treatment unit according to claim 1, **characterized in that** said at least one heat-exchanging group (8) comprises:
- a plurality of ducts (9) each having one end thereof in fluid communication with said receiving cavity (3) and its other end directly leading to an exhaust (11, 12a); and
- a receiving chamber (10) for said plurality of ducts (9) having at least one inlet opening (10a) for a secondary gas medium to be put in heat exchange relationship with said treatment gas medium, and at least one outlet opening (10b) for the secondary gas medium heated by the treatment gas medium.

3. A treatment unit according to claim 2, **characterized in that** said exhaust (11, 12a) comprises a manifold member (11).

4. A treatment unit according to claim 2 or 3, **characterized in that** said receiving chamber (10) comprises:
- a pair of plate elements (8a, 8b) mutually spaced from one another and each being formed with a plurality of bores (F), each bore (F) in one plate element (8a, 8b) being aligned with a respective bore in the other plate element (8b, 8a) of said pair for the fitting therein of a respective duct (9), and
- a winding side wall or jacket (8c) between said couple of plate elements (8a, 8b).

5. A treatment unit according to claim 4, **characterized in that** a respective aperture is provided in each plate element of said pair of plate elements (8a, 8b) for sealingly fitting therein a feeding duct (13) for supplying a granular material to said upper loading mouth (4).

6. A treatment unit according to claim 5, **characterized in that** each plate element of said pair of plate elements (8a, 8b) has an outer peripheral configuration substantially shaped as the top of said silo or hopper (2).

7. A treatment unit according to any claim 4 to 6, **characterized in that** said side jacket (8c) is covered with at least one layer of heat insulating material (8d).

8. A treatment unit according to any claim 4 to 7, **characterized in that** it comprises annular joint sealing elements (14), each of which is removably mounted at a respective bore (F) formed in one of said plate elements (8a) and designed to slidingly and sealingly engage a respective duct (9) together with a respective annular joint sealing element (14) movably set up in the other plate element (8b).

9. A treatment unit according to claim 8, **characterized in that** said annular joint sealing elements (14) are made of a thermoplastic material.

10. A treatment unit according to claim 9, **characterized in that** said thermoplastic material comprises Santoprene®.

11. A treatment unit according to any previous claim, **characterized in that** it comprises at least one filtering group (15) arranged between said at least one heat-exchanging group (8) and said receiving cavity (3).

12. A plant for dehumidifying a granular material, **characterized in that** it comprises:
- at least one treatment unit (1) according to any previous claim 1 to 10; and
- at least one dryer (17) designed to regenerate said gas medium coming from said at least one treatment unit and to convey it to said at least one heat-exchanging group (8) for being pre-heated.

13. A plant according to claim 12, **characterized in that** it comprises:
- at least one heating group (18) in fluid communication, at one side thereof, with said heat-exchanging group (8) and, at the other, with said feeding duct (6) of said at least one treatment unit.

14. A plant according to claim 12 or 13, **characterized in that** it comprises:
- at least one filtering group (16) arranged between said at least one treatment unit (1) and said at least one dryer (17).
